(19) **Europäisches Patentamt / European Patent Office / Office européen des brevets**

(11) **EP 1 391 444 B1**

(12) **FASCICULE DE BREVET EUROPEEN**

(45) Date de publication et mention
de la délivrance du brevet:
**05.09.2007 Bulletin 2007/36**

(51) Int Cl.:
***C04B 41/87*** *(2006.01)*     ***C04B 35/58*** *(2006.01)*
***C04B 35/56*** *(2006.01)*

(21) Numéro de dépôt: **03102317.9**

(22) Date de dépôt: **28.07.2003**

(54) **Procédé de fabrication d'un materiau réfractaire, revêtement protecteur susceptible d'être obtenu par ce procédé et leurs utilisations**

Verfahren zur Herstellung eines Feuerfestmaterials, damit herstellbare Schutzbeschichtung und deren Verwendungen

Process for making a refractory material, protective coating obtainable by such process and their uses

(84) Etats contractants désignés:
**DE GB**

(30) Priorité: **30.07.2002 FR 0209677**

(43) Date de publication de la demande:
**25.02.2004 Bulletin 2004/09**

(73) Titulaire: **EADS Space Transportation GmbH
28199 Bremen (DE)**

(72) Inventeurs:
• **LESPADE, Pierre
33700, MERIGNAC (FR)**

• **GOURSAT, Paul
87430, VERNEUIL SUR VIENNE (FR)**
• **RICHET, Nicolas
87000, LIMOGES (FR)**

(74) Mandataire: **Poulin, Gérard et al
BREVALEX
3, rue du Docteur Lancereaux
75008 Paris (FR)**

(56) Documents cités:
**WO-A-94/14729**

**Description**

**Domaine technique**

La présente invention se rapporte à un procédé de fabrication d'un matériau réfractaire apte à résister à la corrosion et, plus particulièrement, à l'oxydation lorsqu'il est placé dans un environnement oxydant à de très hautes températures (supérieures à 1000°C), à un revêtement protecteur susceptible d'être obtenu par ce procédé ainsi qu'aux utilisations de ce procédé et de ce revêtement.

Le procédé, qui est utilisable aussi bien pour réaliser des pièces massives que pour produire des revêtements propres à protéger de telles pièces contre la corrosion, est susceptible de trouver application dans l'aérospatiale et l'aéronautique, par exemple, pour la fabrication de pièces de propulsion (turbines, tuyères, ...) et d'éléments du fuselage et de la voilure exposés à une forte oxydation en vol comme les bords d'attaque des navettes spatiales ou des avions, dans les centrales thermiques, par exemple, pour la fabrication d'échangeurs thermiques et, plus généralement, dans toutes les industries où existent des contraintes thermiques et chimiques particulières (métallurgie, industrie chimique, industrie automobile, ...).

**Etat de la technique antérieure**

Il est connu d'utiliser des borures et des carbures métalliques, et notamment des borures et des carbures de hafnium et de zirconium, en association avec du carbure de silicium, pour fabriquer, soit des céramiques massives réfractaires, soit des revêtements destinés à protéger des pièces à base de carbone contre l'oxydation à de très hautes températures.

Ainsi, par exemple :

* US-A-3,775,137 [1] divulgue des céramiques massives qui sont constituées d'un borure métallique - lequel est, de préférence, du borure de zirconium - associé à du carbure de silicium ;
* US-A-5,750,450 [2] décrit des céramiques massives censées résister encore mieux à la corrosion à haute température que les précédentes et qui sont obtenues à partir de mélanges plus complexes, comprenant deux, trois, voire quatre composés choisis parmi les borures et les carbures de hafnium et de zirconium, en association avec du carbure de silicium ; tandis que
* EP-A-0 675 863 [3] au nom de la Demanderesse propose d'utiliser un mélange de borure de hafnium et de carbure de silicium pour revêtir la surface d'un matériau ou d'un article en carbone afin de le protéger contre l'oxydation à des températures comprises entre 1700 et 2000°C.

Les céramiques massives décrites dans les brevets américains précités sont obtenues par des procédés qui consistent à mélanger les différents constituants ($ZrB_2$, $HfB_2$, SiC, ...) sous forme pulvérulente, éventuellement en présence d'un solvant, puis à couler le mélange résultant dans un moule, à le sécher s'il renferme un solvant, et à le soumettre à un pressage à chaud (c'est-à-dire à des températures de l'ordre de 2000°C) le temps nécessaire pour obtenir un matériau ayant une densité au moins égale à 95% de la densité destinée à être présentée par les céramiques une fois achevées.

Cette opération de pressage à chaud ne peut, à l'évidence, être utilisée pour réaliser des revêtements protecteurs sur des substrats.

C'est la raison pour laquelle le revêtement protecteur décrit dans EP-A-0 675 863 est, lui, obtenu par un procédé qui consiste à déposer sur la surface devant être protégée un mélange pulvérulent de borure de hafnium et de carbone à partir d'une barbotine, à sécher ce dépôt, puis à exposer ladite surface à des vapeurs de silicium, sous vide partiel et à 1850°C, pour induire une réaction entre le carbone présent dans le dépôt et ce silicium et, partant, la formation de carbure de silicium.

Ce dernier document n'est pas le seul à faire réagir du carbone et du silicium pour mettre en place du carbure de silicium dans un matériau. Ainsi, des procédés utilisant une infiltration réactive du silicium ont aussi été décrits dans FR-A-2 551 433 [4], US-A-4,385,020 **[5]** et US-A-6,126,749 [6], pour la fabrication de céramiques massives de carbure de silicium, ainsi que dans FR-A-2 790 470 [7] pour celle de composites de carbure de silicium renforcés par des fibres, le silicium étant apporté, selon les cas, par trempage d'une préforme carbonée dans un bain de silicium fondu (comme, par exemple, dans US-A-6,126,749) ou par enrobage de particules de carbone avec une poudre siliceuse et fusion de cette poudre (comme, par exemple, dans US-A-4,385,020).

D'une manière générale, les procédés utilisant une réaction C + Si proposés à ce jour ne permettent pas de maîtriser les quantités de carbone et de silicium mises à réagir, alors même que cette réaction doit être la plus stœchiométrique possible pour limiter au maximum les quantités résiduelles de carbone et de silicium présentes dans le matériau final.

En effet, l'utilisation de silicium en excès par rapport au carbone conduit à la présence de silicium libre dans le matériau final, qui est chimiquement très néfaste car, soit ce silicium s'oxyde en silice, laquelle fond vers 1600°C, soit il fond avant de s'oxyder, sa propre température de fusion étant de 1410°C. Dans tous les cas, cela risque de se traduire par la formation d'une porosité, de nature à laisser passer l'oxygène au sein de ce matériau ou, à tout le moins, d'en perturber les caractéristiques, notamment en termes de viscosité, de réfractarité ou de propriétés mécaniques.

De manière similaire, l'utilisation de carbone en excès par rapport au silicium conduit à la présence de carbone libre dans le matériau final, qui est tout aussi néfaste, l'oxydation de ce carbone pouvant, elle aussi, être responsable de la formation d'une porosité et, partant, d'un défaut d'étanchéité et d'une altération des propriétés mécaniques.

Ainsi, dans le cas où l'apport de silicium est réalisé par trempage d'une préforme carbonée dans un bain de silicium fondu, il est extrêmement difficile de maîtriser la quantité de silicium susceptible de rester sur les faces de la préforme lorsque celle-ci est retirée du bain et, a fortiori, de maîtriser la quantité de silicium libre risquant de se retrouver dans le matériau une fois celui-ci achevé. Ceci est d'autant plus gênant que la préforme est peu épaisse (le rapport entre la quantité de silicium libre et le volume du matériau étant, en effet, d'autant plus élevé), ce qui est notamment le cas lorsque l'on réalise un revêtement protecteur.

L'infiltration du silicium en phase vapeur n'est guère plus simple à maîtriser et l'expérience montre qu'elle aboutit à un excès de silicium libre à la surface du matériau.

De plus, elle nécessite des fours très spécifiques, car ils doivent pouvoir fonctionner à des températures très élevées et sous pression réduite, et donc d'un coût particulièrement élevé et ce, d'autant plus que les pièces que l'on souhaite fabriquer ou protéger sont de grande taille ou de forme complexe.

Par ailleurs, la plupart des procédés utilisant une réaction C + Si proposés à ce jour prévoient d'apporter et de faire réagir le carbone sous une forme pulvérulente. Dans ce cas, le carbure de silicium se présente également sous la forme de particules dans le matériau final (la réaction C + Si se produisant sur chaque particule de carbone), particules entre lesquelles s'établit une porosité avec toutes les conséquences néfastes précédemment mentionnées.

Les Inventeurs se sont donc fixé pour but de fournir un procédé de fabrication d'un matériau réfractaire à base de borure(s) et/ou de carbure(s) métallique(s) et de carbure de silicium, qui soit exempt des inconvénients présentés par les procédés précédemment mentionnés, notamment en ce qu'il permet d'obtenir un matériau homogène, à teneurs en carbone et en silicium libres les plus réduites possibles, de manière à présenter des propriétés barrière à l'oxygène remarquables, y compris à de très hautes températures, en ce qu'il se prête aussi bien à la réalisation de revêtements protecteurs qu'à la fabrication de pièces massives et ce, quelles que soient la taille et la forme des pièces à protéger ou à fabriquer, et en ce qu'il ne nécessite pas, pour sa mise en oeuvre, d'équipements spécifiques particulièrement onéreux.

Ces buts sont atteints par la présente invention qui propose un procédé de fabrication d'un matériau réfractaire.

## Exposé de l'invention

Le procédé selon l'invention est caractérisé en ce qu'il comprend les étapes suivantes :

a) déposer sur la surface d'un substrat ou dans un moule une première dispersion contenant au moins un composé métallique choisi parmi les borures, les carbures et les borocarbures comprenant au moins un métal de transition, ce composé se trouvant sous forme pulvérulente, et une résine ayant une teneur massique en coke au moins égale à 30% après carbonisation,

b) sécher le dépôt ainsi réalisé,

c) réticuler la résine présente dans ce dépôt,

d) carboniser cette résine sous atmosphère inerte,

e) recouvrir ledit dépôt par une deuxième dispersion contenant du silicium sous forme pulvérulente et un liant, et

f) chauffer le dépôt réalisé à l'étape e) à une température au moins égale à la température de fusion du silicium, sous atmosphère inerte,
les étapes a) et b) pouvant être répétées une ou plusieurs fois avant de procéder à l'étape c).

Ainsi, le procédé selon l'invention met en oeuvre, comme les procédés de l'état de la technique précédemment évoqués, une infiltration réactive du silicium mais, à la différence de ces derniers, le carbone et le silicium sont apportés via le dépôt de dispersions - que l'on désigne communément "barbotines" dans le domaine de la fabrication des céramiques -, ce qui permet de maîtriser les quantités de carbone et de silicium mises à réagir par la composition de ces dispersions et par la masse surfacique des dépôts.

De plus, le procédé selon l'invention prévoit d'apporter le carbone sous la forme d'une résine, qui est mélangée au composé métallique pulvérulent, puis carbonisée de manière à être réduite en coke, ce qui permet d'obtenir, dans un premier temps, un enrobage des particules dudit composé par du carbone, puis, après infiltration réactive du silicium, un enrobage de ces mêmes particules par du carbure de silicium.

Il en résulte un matériau d'une grande homogénéité et à très faibles teneurs en carbone et en silicium libres.

Comme précédemment mentionné, le procédé selon l'invention comprend, en premier lieu, le dépôt sur la surface d'un substrat ou dans un moule (selon que l'on veut réaliser un revêtement protecteur ou une pièce massive) d'une première dispersion ou "barbotine" contenant à la fois au moins un composé métallique choisi parmi les borures, les carbures et les borocarbures comprenant au moins un métal de transition, ce composé se trouvant sous forme pulvérulente, et une résine ayant une teneur massique en coke au moins égale à 30% après carbonisation.

Au sens de la présente invention, on entend par "composé métallique choisi parmi les borures, les carbures et les borocarbures comprenant au moins un métal de transition", tout composé résultant de la réaction entre du bore et/ou du carbone et un ou plusieurs métaux appartenant à l'une des colonnes 3 à 12 de la Classification Périodique des Eléments, encore connue sous le nom de Classification de Mendeleïev.

A titre d'exemples de tels composés, on peut citer les borures et carbures de titane ($TiB_2$, TiC), de vanadium ($VB_2$, VC), de chrome ($CrB_2$, $Cr_3C_2$) , de zirconium ($ZrB_2$, ZrC), de niobium ($NbB_2$, NbC), de molybdène ($Mo_2B_6$, $Mo_2C$) , de hafnium ($HfB_2$, HfC), de tantale ($TaB_2$, TaC), de tungstène (WB, $WB_2$, WC), le borocarbure de titane ($TiB_4C$), le carbure de tantalehafnium ($Ta_4HfC_5$), le carbure de tungstène-titane ($WTiC_2$) et les carbures de tungstène-cobalt (WC à 6% de Co, WC à 12% de Co, ...).

De préférence, le composé métallique est choisi parmi les borures et les carbures de hafnium, de zirconium et de titane, ces composés présentant, en effet, d'excellentes propriétés de réfractarité.

Par ailleurs, on entend par "résine ayant une teneur massique en coke au moins égale à 30% après carbonisation", tout polymère thermodurcissable ou thermoplastique dont la carbonisation conduit à un coke qui représente en masse au moins 30% de la masse que présente la résine après réticulation mais avant carbonisation.

De préférence, la résine présente une teneur massique en coke au moins égale à 45% après carbonisation et est choisie parmi les résines phénoliques et les résines furaniques.

A titre d'exemples de résines susceptibles d'être utilisées dans le procédé selon l'invention, on peut citer la résine phénolique commercialisée par la société RHODIA sous la référence RA 101 et la résine furanique FRD 5129 de la société BORDEN.

Selon l'invention, le composé métallique est, préférentiellement, présent dans la première dispersion sous la forme de particules de diamètre moyen inférieur ou égal à 5 $\mu$m. Cela signifie que, dans le cas où le composé métallique que l'on souhaite utiliser ne présente pas une telle granulométrie, il convient de le broyer avant de le mélanger à la résine. Ce broyage est avantageusement réalisé après dispersion de ce composé dans un solvant en présence d'un dispersant, par exemple un ester phosphorique ou un mélange d'esters phosphoriques, propre à éviter que les particules dudit composé ne s'agglomèrent les unes aux autres et ne précipitent.

A l'issue de ce broyage, la résine peut être ajoutée à la dispersion de composé métallique et l'ensemble rendu homogène, ce qui est d'autant plus aisé que le solvant choisi initialement pour broyer le composé métallique est un solvant apte à dissoudre cette résine.

Une fois le dépôt de la première dispersion effectué, le procédé selon l'invention prévoit de sécher ce dépôt en vue d'éliminer le solvant qu'il renferme. Selon la volatilité de ce dernier, ce séchage peut être réalisé en laissant tout simplement le solvant s'évaporer à l'air libre ou en utilisant une enceinte chauffée telle qu'une étuve.

Conformément à l'invention, il est alors possible de procéder à un nouveau dépôt de la première dispersion suivi d'un séchage et ce, autant que fois que désiré, en fonction de l'épaisseur que l'on souhaite donner au matériau.

En variante, il est également possible de passer directement à l'étape suivante qui consiste à réticuler la résine présente dans le dépôt de manière à rigidifier ce dernier.

Puis, la résine est soumise à une carbonisation destinée à la réduire en coke. Cette opération est réalisée sous atmosphère inerte, c'est-à-dire sous azote, argon, néon ou analogue, pour éviter que le carbone produit par la résine ne réagisse avec l'oxygène atmosphérique. De plus, elle est, de préférence, réalisée à haute température (soit, en pratique, à une température au moins égale à 900°C) pour éliminer plus facilement les principaux atomes d'impureté (O, N, S, partiellement H).

Le procédé selon l'invention comprend ensuite une étape consistant à recouvrir le(s) dépôt(s) réalisé(s) avec la première dispersion par une deuxième dispersion qui contient, elle, du silicium sous forme pulvérulente et un liant dont le rôle est de permettre une répartition homogène et le maintien de ce silicium sur le dépôt sous-jacent.

De préférence, ce liant est une solution comprenant environ 5% (m/m) de carboxyméthylcellulose et forme la phase liquide de la deuxième dispersion.

Enfin, le procédé selon l'invention prévoit de chauffer le dépôt effectué avec la deuxième dispersion à une température au moins égale à la température de fusion du silicium (1410°C) et sous atmosphère inerte, de manière à ce que ce dernier puisse s'infiltrer sous forme liquide dans l'épaisseur du (des) dépôt (s) sous-jacent (s) et réagir avec le carbone issu de la carbonisation de la résine pour former du carbure de silicium.

Le procédé selon l'invention s'est révélé être particulièrement bien adapté à la réalisation d'un revêtement destiné à protéger une pièce contre l'oxydation à de très hautes températures et, notamment, une pièce à base de carbone. En effet, l'infiltration sous forme liquide du silicium permet à ce dernier d'atteindre l'interface entre le revêtement et la pièce sous-jacente, et de réagir avec le carbone présent à la surface de cette pièce pour former une couche de carbure de silicium *in situ.*

Cette dernière assure un accrochage à la fois chimique et mécanique du revêtement sur la pièce carbonée qu'il vise à protéger, et permet de s'affranchir de la nécessité de déposer préalablement, sur la surface de cette pièce, une couche intermédiaire, par exemple siliciurée dans le cas d'un composite C/C, propre à induire une compatibilité mécanique entre ledit revêtement et ladite pièce, notamment lorsque ceux-ci présentent des coefficients de dilatation très différents.

Aussi, selon un mode de mise en oeuvre préféré de ce procédé, à l'étape a), le substrat sur lequel est déposée la première dispersion est une pièce constituée de graphite ou d'un matériau composite comprenant une matrice en carbone ou en carbure de silicium, et des fibres en carbone ou en carbure de silicium (composites C/C, C/SiC, SiC/C et SiC/SiC).

Ce dépôt, comme celui de la deuxième dispersion, peut notamment être effectué, soit par trempage de la pièce dans les dispersions, soit par pulvérisation de ces dernières sur cette pièce.

En variante, toutefois, le procédé selon l'invention peut également être mis en oeuvre pour la réalisation d'une pièce massive, auquel cas le dépôt des deux dispersions est réalisé par coulage dans un moule approprié.

Selon l'invention, on préfère réaliser un matériau contenant de 50 à 95% (m/m) de borure de hafnium et de 5 à 50% (m/m) de carbure de silicium, ce type de matériau étant potentiellement, parmi les matériaux à base de borures et/ou de carbures métalliques et de carbure de silicium, ceux qui présentent la résistance aux très hautes températures à la fois la plus élevée et la plus durable.

Dans ce cas, les teneurs en borure de hafnium et en résine de la première dispersion sont telles que, à l'issue de l'étape d), le rapport massique entre le borure de hafnium et le carbone issu de la carbonisation de la résine va de 18:1 à 1:1, compte tenu du taux massique en coke présenté par ladite résine après carbonisation, tandis que la teneur en silicium de la deuxième dispersion est telle que, à l'issue de l'étape e), le rapport molaire entre le carbone issu de la carbonisation de la résine et le silicium déposé est égal à 1 ou très peu différent de 1, compte tenu de la masse surfacique du dépôt réalisé avec cette deuxième dispersion.

Le procédé selon l'invention présente de nombreux avantages. En effet :

- il permet d'obtenir un matériau réfractaire extrêmement résistant à la corrosion à de très hautes températures, notamment en raison de son homogénéité et des très faibles teneurs en carbone et en silicium libres qu'il renferme ;
- il offre la possibilité de réaliser ce matériau aussi bien sous la forme d'un revêtement destiné à protéger une pièce que sous celle d'une pièce massive ;
- dans le cas où il est utilisé pour fabriquer un revêtement protecteur sur une pièce à base de carbone, il permet de supprimer la nécessité d'intercaler, entre ce revêtement et la pièce, une couche intermédiaire destinée à leur conférer une compatibilité mécanique, ce qui se traduit par un gain financier ;
- il est simple à mettre en oeuvre car la préparation de barbotines et leur dépôt sur la surface d'un substrat ou dans un moule sont des opérations faciles à exécuter ;
- les traitements thermiques qu'il met en jeu peuvent être effectués dans des fours sans aménagements spécifiques autres que la présence d'une atmosphère neutre, ce qui est également très intéressant sur le plan économique ;
- il convient donc aussi bien à des fabrications en séries qu'à des fabrications à l'unité de pièces de grande taille et de forme complexe.

Compte tenu de ce qui précède, la présente invention a également pour objet l'utilisation du procédé tel que précédemment défini pour la fabrication de revêtements destinés à protéger de la corrosion à de très hautes températures une pièce à base de carbone et, notamment, une pièce constituée de graphite ou d'un matériau composite comprenant une matrice et des fibres en carbone et/ou en carbure de silicium.

De tels revêtements présentent notamment un intérêt dans le domaine de l'aérospatiale et de l'aéronautique, que ce soit pour la protection de pièces entrant dans la constitution des systèmes de propulsion ou pour celle de pièces de structures comme le fuselage et la voilure des engins spatiaux et des avions.

La présente invention a encore pour objet un revêtement protecteur contenant du borure de hafnium et du carbure de silicium, qui est caractérisé en ce qu'il est susceptible d'être obtenu par le procédé tel que précédemment défini.

Selon un mode de réalisation préféré de ce revêtement, ce dernier contient de 50 à 95% (m/m) de borure de hafnium et de 5 à 50% (m/m) de carbure de silicium.

La présente invention a enfin pour objet l'utilisation de ce revêtement protecteur pour protéger de la corrosion à de très hautes températures une pièce à base de carbone et, notamment, une pièce constituée de graphite ou d'un matériau composite comprenant une matrice et des fibres en carbone et/ou en carbure de silicium.

Outre les dispositions qui précèdent, l'invention comprend encore d'autres dispositions qui ressortiront du complément de description qui suit, qui est donné à titre illustratif et non limitatif, en référence aux dessins annexés.

## Brève description des dessins

La figure 1 représente la distribution de la taille des pores présentés par 5 monolithes $HfB_2$/SiC réalisés par le procédé selon l'invention, au terme de l'étape d) de ce procédé.

La figure 2 représente deux photographies, respectivement A et B, prises au microscope électronique à balayage, à deux grossissements différents (150 x et 500 x), d'une coupe transversale d'un revêtement $HfB_2$/SiC réalisé par le procédé selon l'invention sur un substrat composite C/C.

La figure 3 représente deux photographies, respectivement A et B, prises au microscope électronique à balayage, à deux grossissements différents (150 x et 500 x), d'une coupe transversale d'un revêtement $HfB_2$/SiC réalisé par le procédé selon l'invention sur un substrat en graphite.

La figure 4 représente deux photographies, respectivement A et B, prises au microscope électronique à balayage, à deux grossissements différents (500 x et 1500 x), d'une coupe transversale d'un revêtement $HfB_2$/SiC réalisé par le procédé selon l'invention sur un substrat composite C/C siliciuré.

La figure 5 représente une photographie prise au microscope électronique à balayage d'une coupe transversale d'un monolithe réalisé par le procédé selon l'invention.

La figure 6 représente l'évolution de la variation de la masse par unité de surface (mg/cm$^2$) d'un monolithe réalisé par le procédé selon l'invention, en fonction de la température (°C) lorsqu'il est soumis à une montée linéaire de température sous balayage d'un mélange $O_2$/He à 20% (v:v) d'$O_2$.

La figure 7 représente l'évolution de la variation de la masse par unité de surface (mg/cm$^2$) d'un monolithe réalisé par le procédé selon l'invention, en fonction du temps (heures) lorsqu'il est maintenu à 800°C, 1000°C, 1450°C et 1600°C sous balayage d'un mélange $O_2$/He à 20% (v:v) d'$O_2$.

La figure 8 représente une photographie prise au microscope électronique à balayage, à un grossissement de 500 x, d'une coupe transversale d'un monolithe réalisé par le procédé selon l'invention, au terme d'une oxydation de 10 heures à 1600°C et sous balayage d'un mélange $O_2$/He à 20% (v:v) d'$O_2$.

## Exemple 1 : réalisation de matériaux $HfB_2$/SiC par le procédé selon l'invention

On réalise des matériaux $HfB_2$/SiC par le procédé selon l'invention, à partir d'une première dispersion contenant du borure de hafnium et une résine phénolique, et d'une deuxième dispersion contenant du silicium et une solution aqueuse à 5% de carboxyméthylcellulose en tant que liant.

Ces matériaux sont réalisés :

- soit sous la forme de revêtements par dépôt des dispersions sur des substrats constitués de graphite ou d'un matériau composite C/C ou C/C siliciuré (c'est-à-dire dont la surface a été recouvert d'une couche de carbure de silicium comme décrit dans FR-A-2 611 198 [8]),
- soit sous la forme de monolithes. Les modalités opératoires sont précisées ci-après.

### 1.1 - Préparation de la dispersion de $HfB_2$ et de résine phénolique

50 g de poudre de $HfB_2$, 7 g d'éthanol et 0,2 g d'un mélange d'un monoester et d'un diester, ester phosphoriques (CECA ATOCHEM - référence Beycostat C213) sont introduits dans la jarre d'un broyeur semi-planétaire conjointement avec 5 billes de carbure de tungstène dont 4 de 1 cm de diamètre et une de 2 cm de diamètre.

Le broyage est effectué pendant 6 heures, à la suite de quoi 8 g d'une résine phénolique (RHODIA-référence RA 101) et 2 g d'éthanol sont introduits dans la jarre de broyage et on poursuit le broyage pendant 1 minute pour obtenir une dispersion homogène.

### 1.2 - Préparation de la dispersion de silicium et de liant

40 g de poudre de Si et 25 g d'une solution aqueuse (eau déminéralisée) à 5% de carboxyméthylcellulose sont introduits dans un bécher de 50 ml. Ce bécher est mis dans un bain de glace et une sonde à ultrasons est placée à 0,5 cm du fond du bécher. On soumet la dispersion aux ultrasons, dans un sonicateur BIOBLOC SCIENTIFIC, de type Vibracell, modèle 72441, 5 fois 1 minute séparées les unes des autres par 1 minute de repos.

### 1.3 - Dépôt de la dispersion de HfB$_2$ et de résine phénolique

Dans le cas des revêtements, le dépôt de la dispersion contenant le borure de hafnium et la résine phénolique est effectué en trempant les substrats dans cette dispersion et en les retirant à vitesse constante. L'épaisseur des dépôts ainsi réalisés est sensiblement de 50 $\mu$m sur le graphite et de 100 $\mu$m sur les substrats composites.

Dans le cas des monolithes, le dépôt est réalisé en coulant la dispersion sur une feuille de papier glacé qui est elle-même disposée sur une plaque métallique. L'étalement de la dispersion est forcé par inclinaison de la plaque métallique de manière à obtenir des dépôts les plus fins possibles. L'épaisseur des dépôts ainsi réalisés est comprise entre 200 et 400 $\mu$m.

### 1.4 - Séchage des dépôts

Les dépôts sont séchés dans une étuve dont la température interne est de 60°C jusqu'à élimination complète de l'éthanol.

### 1.5 - Réticulation de la résine phénolique

La réticulation de la résine phénolique est effectuée dans une étuve sous air dont la température interne est portée à 180°C, à raison de 9°C par minute, et est maintenue à cette valeur pendant 1 heure. Elle est suivie d'un refroidissement non contrôlé.

### 1.6 - Carbonisation de la résine phénolique

La carbonisation de la résine phénolique est effectuée dans un four sous azote dont la température interne est portée à 1200°C, à raison de 10°C par minute, et est maintenue à cette valeur pendant 1 heure. Elle est suivie d'un refroidissement non contrôlé.

### 1.7 - Dépôt de la dispersion de silicium et de liant

Le dépôt de la dispersion contenant le silicium et le liant est effectué de la même manière que celui de la dispersion contenant le borure de hafnium et la résine phénolique.

### 1.8 - Infiltration réactive du silicium

L'infiltration réactive du silicium est réalisée dans un four sous argon dont la température interne est portée à 1430°C, à raison de 10°C par minute, et est maintenue à cette valeur pendant 1 heure.

A l'issue de ce traitement, un simple brossage permet d'éliminer la couche de poudre de carbure de silicium s'étant formée à la surface des matériaux ainsi que le silicium excédentaire présent sur cette surface.

### Exemple 2 : analyse de la microstructure des matériaux réalisés dans l'exemple 1

La microstructure des matériaux réalisés dans l'exemple 1 est appréciée, d'une part, par une analyse de la distribution de la taille des pores présentés par ces matériaux au terme de la carbonisation de la résine phénolique, et, d'autre part, par un examen au microscope électronique à balayage (MEB).

### 2.1 - Distribution de la taille des pores

On détermine la distribution de la taille des pores de 5 monolithes - respectivement M1, M2, M3, M4 et M5 - préparés dans des conditions strictement identiques, au terme de la carbonisation de la résine phénolique par la technique d'intrusion au mercure. On utilise pour ce faire un porosimètre à mercure MICROMERICS Asap 2000.

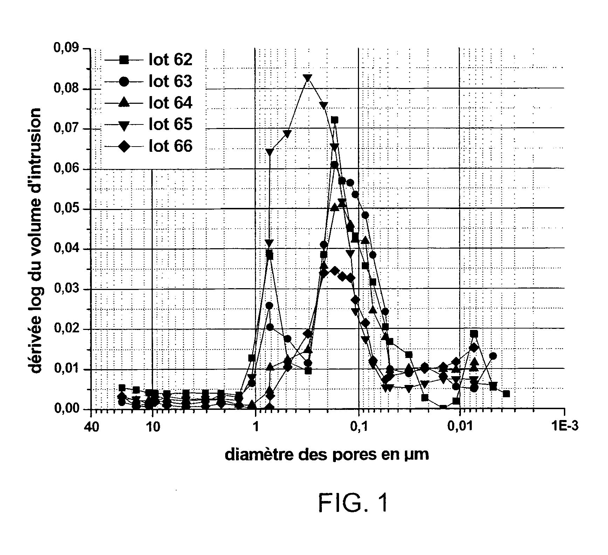

Les résultats sont illustrés, sous la forme de graphiques, sur la figure 1 dans laquelle l'axe des ordonnées représente la dérivée logarithmique du volume d'intrusion du mercure, tandis que l'axe des abscisses représente la taille des pores exprimée en $\mu$m.

Cette figure montre que la distribution de la porosité des 5 monolithes est très homogène d'un monolithe à l'autre, qui témoigne d'une excellente reproductibilité de la microstructure poreuse des matériaux réalisés par le procédé selon l'invention.

## 2.2 - Examen au MEB

L'examen au MEB de la microstructure des matériaux est réalisé sur des coupes transversales de ces matériaux et, dans le cas de revêtements, des substrats sur lesquels ils ont été réalisés, au moyen d'un microscope LEICA Stereoscan 360FE.

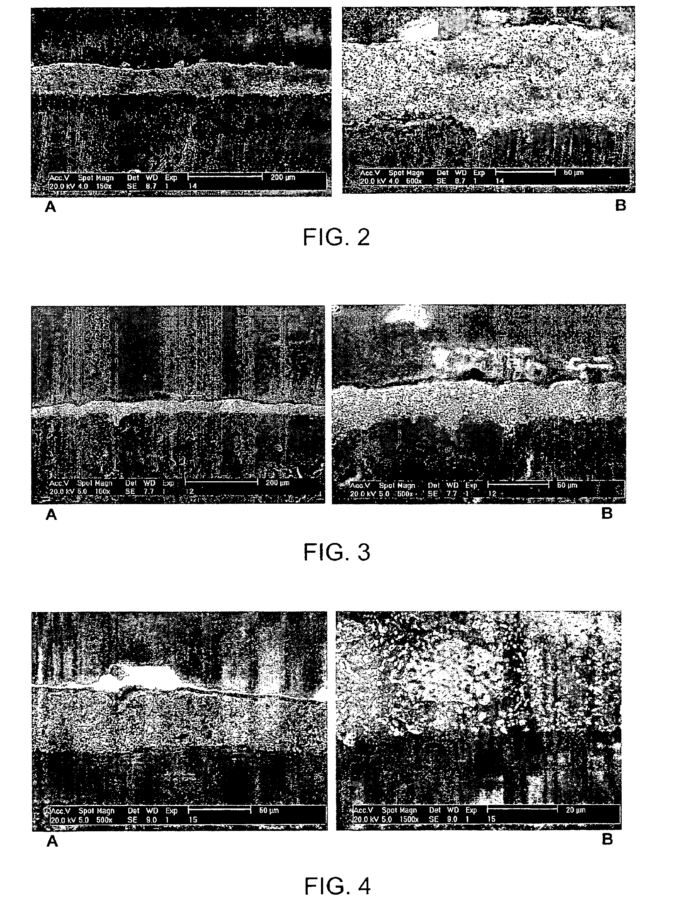

Les résultats sont illustrés par les figures 2 à 5 qui représentent :

- figure 2 : les photographies d'un revêtement réalisé sur un substrat composite C/C, la photographie A correspondant à un grossissement de 150 x et la photographie B correspondant à un grossissement de 500 x ;
- figure 3 : les photographies d'un revêtement réalisé sur un substrat en graphite, la photographie A correspondant à un grossissement de 150 x et la photographie B correspondant à un grossissement de 500 x ;
- figure 4 : les photographies d'un revêtement réalisé sur un substrat composite C/C siliciuré, la photographie A correspondant à un grossissement de 500 x et la photographie B correspondant à un grossissement de 1500 x ; et

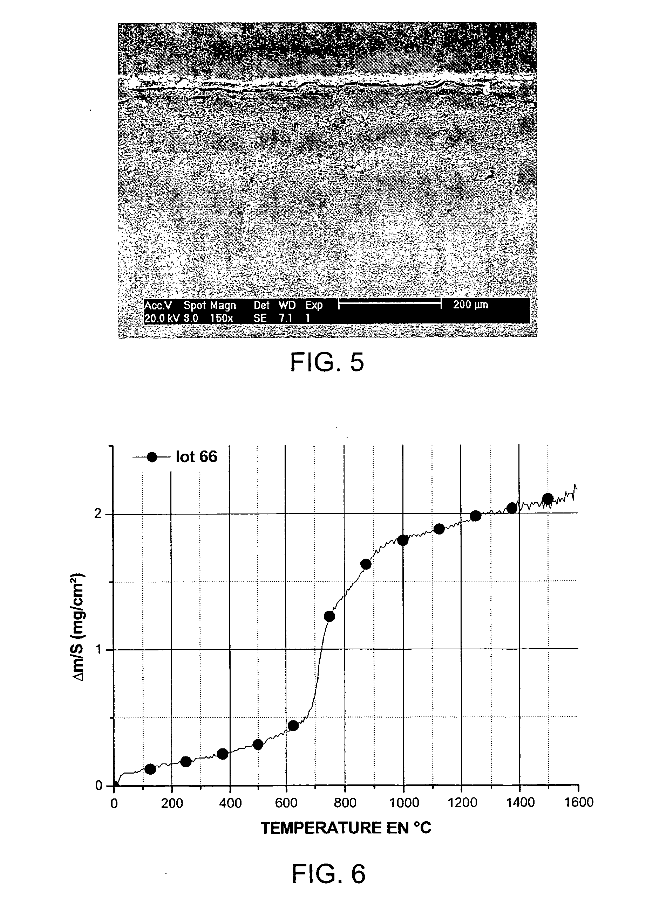

- figure 5 : la photographie, prise à un grossissement de 500 x, d'un monolithe.

Ces figures montrent que les matériaux réalisés par le procédé selon l'invention présentent une microstructure composite relativement dense et très homogène, composée de grains de $HfB_2$ liés par une matrice de carbure de silicium et ce, qu'il s'agisse de monolithes ou de revêtements et, dans ce dernier cas, quelle que soit la nature du substrat sous-jacent et qu'il soit siliciuré ou non.

Ainsi, cet exemple confirme que le procédé selon l'invention permet, dans le cas où il est utilisé pour réaliser un revêtement protecteur sur un substrat carboné du type substrat composite C/C, de supprimer la mise en place préalable d'une couche destinée à assurer une compatibilité mécanique entre ce revêtement et ledit substrat.

### Exemple 3 : étude des performances des matériaux réalisés dans l'exemple 1

L'aptitude des matériaux réalisés dans l'exemple 1 à résister à l'oxydation à de très hautes températures est appréciée en suivant la variation de la masse par unité de surface du monolithe M5 lorsque ce dernier est, d'une part, soumis à une montée linéaire de la température (de 0 à 1600°C) dans un environnement oxydant, c'est-à-dire sous balayage d'un mélange $O_2$/He à 20% (v:v) d'$O_2$ et, d'autre part, maintenu plusieurs heures à une même température (800, 1000, 1450 ou 1600°C) dans ce même environnement oxydant.

En effet, ces matériaux étant essentiellement constitués de $HfB_2$ et de SiC, les réactions qui peuvent se produire en présence d'oxygène sont :

$$1) \ HfB_2 \ (s) + 5/2O_2 \ (g) \ \longrightarrow \ HfO_2 \ (s) + B_2O_3 \ (s)$$

$$2) \ SiC \ (s) + 3/2O_2 \ (g) \ \longrightarrow \ SiO_2 \ (s) + CO \ (g)$$

lesquelles se soldent chacune par un gain de masse ($\Delta m > 0$).

Par ailleurs, on sait que le trioxyde de bore ($B_2O_3$) résultant de l'oxydation du borure de hafnium forme, à partir de 450°C, une première barrière à la diffusion de l'oxygène et joue le rôle d'agent cicatrisant. Les autres produits d'oxydation apparaissent généralement à partir de 750°C et forment un verre borosilicaté qui permet d'améliorer les performances de la phase cicatrisante et, en particulier, de diminuer sa volatilisation.

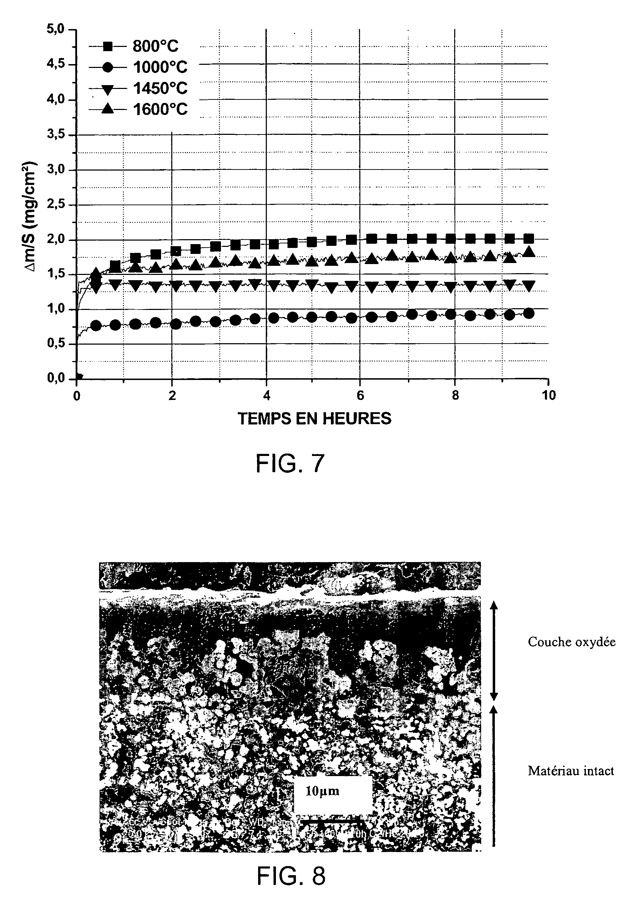

Les résultats obtenus sont illustrés par les figures 6 et 7 qui représentent :

- figure 6 : l'évolution de la variation de la masse ($\Delta m$) par unité de surface, exprimée en $mg/cm^2$, du monolithe M5 en fonction de la température, exprimée en °C, dans le cas où il est soumis à une montée linéaire de température de 0 à 1600°C ;
- figure 7 : l'évolution de la variation de la masse ($\Delta m$) par unité de surface, exprimée en $mg/cm^2$, du monolithe M5 en fonction du temps, exprimé en heures, dans le cas où il est maintenu plusieurs heures à 800°C, 1000°C, 1450°C et 1600°C ; et
- figure 8 : une photographie prise au MEB, à un grossissement de 1500 x, d'une coupe transversale de ce même monolithe au terme d'une oxydation de 10 heures à 1600°C.

La figure 6 montre que le monolithe M5 ne perd pas de masse entre 450 et 650°C, ce qui signifie qu'il ne renferme pas de carbone libre facilement accessible et susceptible de réagir avec l'oxygène ambiant. A partir de 750°C, on note un gain substantiel de masse du monolithe qui s'explique par le fait que les oxydations, d'abord du borure de hafnium, puis du carbure de silicium, s'accélèrent et conduisent à la formation rapide d'une couche vitreuse, cicatrisante et protectrice.

La figures 7 montre que, quelle que soit la température à laquelle le monolithe M5 est maintenu, l'oxydation est rapidement bloquée par la formation de la couche vitreuse constituée initialement de trioxyde de bore et qui s'enrichit en dioxyde de silice et dioxyde d'hafnium. Cette couche vitreuse, dont la volatilité est la principale limitation pour des applications à de très hautes températures, apparaît être stable au moins jusqu'à 1600°C puisque aucune perte de masse n'est observée.

La figure 8 montre, quant à elle, que la couche vitreuse, dont l'épaisseur est d'environ 20 $\mu$m, est compacte et, effectivement, parfaitement cicatrisante.

**Documents cités**

[1] US-A-3,775,137

[2] US-A-5,750,450

[3] EP-A-0 675 863

[4] FR-A-2 551 433

[5] US-A-4,385,020

[6] US-A-6,126,749

[7] FR-A-2 790 470

[8] FR-A-2 611 198

**Revendications**

**1.** Procédé de fabrication d'un matériau réfractaire, **caractérisé en ce qu**'il comprend les étapes suivantes :

a) déposer sur la surface d'un substrat ou dans un moule une première dispersion contenant au moins un composé métallique choisi parmi les borures, les carbures et les borocarbures comprenant au moins un métal de transition, ce composé étant sous forme pulvérulente, et une résine ayant une teneur massique en coke au moins égale à 30% après carbonisation,
b) sécher le dépôt ainsi réalisé,
c) réticuler la résine présente dans ce dépôt,
d) carboniser cette résine sous atmosphère inerte,
e) recouvrir ledit dépôt par une deuxième dispersion contenant du silicium sous forme pulvérulente et un liant, et
f) chauffer le dépôt réalisé à l'étape e) à une température au moins égale à la température de fusion du silicium, sous atmosphère inerte,

les étapes a) et b) pouvant être répétées une ou plusieurs fois avant de procéder à l'étape c).

**2.** Procédé selon la revendication 1, **caractérisé en ce que** le composé métallique est choisi parmi les borures et carbures de hafnium, de zirconium et de titane.

**3.** Procédé selon la revendication 1 ou la revendication 2, **caractérisé en ce que** la résine présente une teneur massique en coke au moins égale à 45% après carbonisation.

**4.** Procédé selon l'une quelconque des revendications précédentes, **caractérisé en ce que** la résine est choisie parmi les résines phénoliques et les résines furaniques.

**5.** Procédé selon l'une quelconque des revendications précédentes, **caractérisé en ce que** le composé métallique présent dans la première dispersion est sous la forme de particules de diamètre moyen inférieur ou égal à 5 $\mu$m.

**6.** Procédé selon l'une quelconque des revendications précédentes, **caractérisé en ce que** le liant présent dans la deuxième dispersion est une solution aqueuse comprenant environ 5% (m/m) de carboxyméthylcellulose.

**7.** Procédé selon l'une quelconque des revendications précédentes, **caractérisé en ce que**, à l'étape a), le substrat sur lequel est déposé la première dispersion est une pièce constituée de graphite ou d'un matériau composite comprenant une matrice et des fibres en carbone et/ou carbure de silicium.

**8.** Procédé selon l'une quelconque des revendications précédentes, **caractérisé en ce que** le composé métallique est du borure de hafnium et **en ce que** les teneurs en borure de hafnium et en résine de la première dispersion sont telles que, à l'issue de l'étape d), le rapport massique entre le borure de hafnium et le carbone issu de la carbonisation va de 18:1 à 1:1, compte tenu du taux massique en coke de ladite résine après carbonisation.

**9.** Procédé selon la revendication 8, **caractérisé en ce que** la teneur en silicium de la deuxième dispersion est telle que, à l'issue de l'étape e), le rapport molaire entre le carbone issu de la carbonisation de la résine et le silicium déposé est égal à 1 ou très peu différent de 1, compte tenu de la masse surfacique du dépôt réalisé avec cette dispersion.

**10.** Utilisation d'un procédé selon l'une quelconque des revendications 1 à 9 pour la fabrication de revêtements destinés à protéger une pièce à base de carbone de la corrosion à de très hautes températures.

**11.** Utilisation selon la revendication 10, **caractérisée en ce que** la pièce à base de carbone est constituée de graphite ou d'un matériau composite comprenant une matrice en carbone ou en carbure de silicium et des fibres en carbone ou en carbure de silicium.

**12.** Revêtement protecteur contenant un composé métallique comprenant du borure de hafnium et du carbure de silicium, **caractérisé en ce qu'**il est susceptible d'être obtenu par un procédé selon l'une quelconque des revendications 1 à 9.

**13.** Revêtement protecteur selon la revendication 12, **caractérisé en ce qu'**il contient de 50 à 95% (m/m) de borure de hafnium et de 5 à 50% (m/m) de carbure de silicium.

**14.** Utilisation d'un revêtement protecteur selon la revendication 12 ou la revendication 13 pour protéger une pièce à base de carbone de la corrosion à de très hautes températures.

**15.** Utilisation selon la revendication 14, **caractérisée en ce que** la pièce à base de carbone est constituée de graphite ou d'un matériau composite comprenant une matrice et des fibres en carbone et/ou en carbure de silicium.


**Claims**

**1.** Process for manufacturing a refractory material, **characterized in that** it comprises the following steps:

a) deposit on the surface of a substrate or in a mould a first dispersion containing at least one metallic compound chosen from among borides, carbides and borocarbides containing at least one transition metal, in powder form, and a resin with a coke mass content equal to at least 30% after carbonization;
b) dry the resulting deposit;
c) cross-link the resin present in this deposit;
d) carbonize this resin under an inert atmosphere;
e) cover the said deposit with a second dispersion containing silicon in powder form and a binder; and
f) heat the deposit made in step e) to a temperature equal to at least the melting temperature of silicon, under an inert atmosphere,

steps a) and b) possibly being repeated one or more times before going onto step c).

**2.** Process according to claim 1, **characterized in that** the metallic compound is chosen from among hafnium, zirconium and titanium borides and carbides.

3. Process according to claim 1 or claim 2, **characterized in that** the resin has a coke mass content equal to at least 45% after carbonization.

4. Process according to any one of the above claims, **characterized in that** the resin is chosen from among phenolic resins and furanic resins.

5. Process according to any one of the above claims, **characterized in that** the metallic compound present in the first dispersion is in the form of particles with an average diameter of less than or equal to 5 $\mu$m.

6. Process according to any one of the above claims, **characterized in that** the binder present in the second dispersion is an aqueous solution of about 5% (m/m) of carboxymethylcellulose.

7. Process according to any one of the above claims, **characterized in that**, in step a), the substrate on which the first dispersion is deposited is a part composed of graphite or a composite material comprising a matrix and fibers in carbon and/or silicon carbide.

8. Process according to any one of the above claims, **characterized in that** the metallic compound is hafnium boride and **in that** the hafnium boride and resin contents of the first dispersion are such that at the end of step d), the mass ratio between hafnium boride and carbon derived from carbonization varies from 18:1 to 1:1, taking account of the mass ratio of coke in the said resin after carbonization.

9. Process according to claim 8, **characterized in that** the silicon content of the second dispersion is such that, after step e), the molar ratio between the carbon derived from carbonization of the resin and the deposited silicon is equal to 1 or is only very slightly different from 1, taking account of the mass per unit area of the deposit made with this second dispersion.

10. Use of a process according to any one of claims 1 to 9 for making coatings intended to protect a carbon-based part from corrosion at very high temperatures.

11. Use according to claim 10, **characterized in that** the carbon-based part is composed of graphite or a composite material comprising a carbon or silicon carbide matrix and carbon and / or silicon carbide fibers.

12. Protective coating containing a metallic compound comprising hafnium boride and silicon carbide, **characterized in that** it can be obtained by a process according to any one of claims 1 to 9.

13. Protective coating according to claim 12, **characterized in that** it contains 50 to 95% (m/m) of hafnium boride and 5 to 50% (m/m) of silicon carbide.

14. Use of a protective coating according to claim 12 or claim 13 to protect a carbon-based part from corrosion at very high temperatures.

15. Use according to claim 14, **characterized in that** the carbon-based part is composed of graphite or a composite material comprising a matrix and fibers in carbon and/or silicon carbide.

**Patentansprüche**

1. Verfahren zur Herstellung eines feuerfesten Materials, **dadurch gekennzeichnet, dass** es die folgenden Stufen umfasst:

   a) die Ablagerung, auf der Oberfläche eines Substrats oder in einer Form, von einer ersten Dispersion, die mindestens eine Metallverbindung, die aus mindestens ein Übergangsmetall umfassenden Boriden, Carbiden und Borocarbiden ausgewählt ist, wobei diese Verbindung in Pulverform vorhanden ist, und ein Harz mit einem Massegehalt an Kohle von mindestens 30 % nach der Karbonisation enthält,
   b) das Trocknen der auf diese Weise realisierten Ablagerung,
   c) das Vernetzen des in der Ablagerung vorhandenen Harzes,

d) das Karbonisieren dieses Harzes in inerter Atmosphäre,

e) das Bedecken dieser Ablagerung mit einer zweiten Dispersion, die Silicium in Pulverform und ein Bindemittel enthält, und

f) das Erhitzen der in der Stufe e) realisierten Ablagerung auf eine Temperatur von mindestens der Schmelztemperatur von Silicium in inerter Atmosphäre, wobei die Stufen a) und b) ein oder mehrere Male wiederholt werden können, bevor zur Stufe c) weitergegangen wird.

2. Verfahren nach Anspruch 1, **dadurch gekennzeichnet, dass** die Metallverbindung aus den Boriden und Carbiden von Hafnium, Zirconium und Titan ausgewählt ist.

3. Verfahren nach Anspruch 1 oder Anspruch 2, **dadurch gekennzeichnet, dass** das Harz einen Massegehalt an Kohle von mindestens 45 % nach der Karbonisation zeigt.

4. Verfahren nach einem der vorhergehenden Ansprüche, **dadurch gekennzeichnet, dass** das Harz aus Phenolharzen und Furanharzen ausgewählt ist.

5. Verfahren nach einem der vorhergehenden Ansprüche, **dadurch gekennzeichnet, dass** die in der ersten Dispersion vorhandene Metallverbindung in der Form von Teilchen eines mittleren Durchmessers von kleiner als oder gleich 5 μm vorhanden ist.

6. Verfahren nach einem der vorhergehenden Ansprüche, **dadurch gekennzeichnet, dass** das in der zweiten Dispersion vorhandene Bindemittel eine wässrige Lösung ist, die etwa 5 % (Gew/Gew) Carboxymethylcellulose umfasst.

7. Verfahren nach einem der vorhergehenden Ansprüche, **dadurch gekennzeichnet, dass** in der Stufe a) das Substrat, auf dem die erste Dispersion abgelagert wird, ein Teil ist, das aus Graphit oder einem Verbundmaterial, das eine Matrix und Carbonfasern und/oder Siliciumcarbidfasern umfasst, besteht.

8. Verfahren nach einem der vorhergehenden Ansprüche, **dadurch gekennzeichnet, dass** die Metallverbindung Hafniumborid ist und dass die Gehalte der ersten Dispersion an Hafniumborid und an Harz derart sind, dass am Ende der Stufe d) das Massenverhältnis zwischen Hafniumborid und Kohlenstoff, das nach der Karbonisation erhalten wird, von 18:1 bis 1:1 reicht, bezogen auf den Massenprozentanteil von Kohle des Harzes nach der Karbonisation.

9. Verfahren nach Anspruch 8, **dadurch gekennzeichnet, dass** der Gehalt der zweiten Dispersion an Silicium derart ist, dass am Ende der Stufe e) das Molverhältnis zwischen dem nach der Karbonisation des Harzes erhaltenen Kohlenstoff und dem abgelagerten Silicium gleich 1 oder sehr wenig von 1 verschieden ist, bezogen auf die Oberflächenmasse der mit dieser Dispersion realisierten Ablagerung.

10. Verwendung eines Verfahrens nach einem der Ansprüche 1 bis 9 zur Herstellung von Überzügen, die dazu bestimmt sind, ein Teil auf der Basis von Kohlenstoff vor Korrosion bei sehr hohen Temperaturen zu schützen.

11. Verwendung nach Anspruch 10, **dadurch gekennzeichnet, dass** das Teil auf der Basis von Kohlenstoff aus Graphit oder einem Verbundmaterial, das eine Matrix aus Kohlenstoff oder aus Siliciumcarbid und Carbonfasern oder Siliciumcarbidfasern umfasst, besteht.

12. Schutzüberzug, der eine Hafniumborid und Siliciumcarbid umfassende Metallverbindung enthält, **dadurch gekennzeichnet, dass** er durch ein Verfahren nach einem der Ansprüche 1 bis 9 erhalten werden kann.

13. Schutzüberzug nach Anspruch 12, **dadurch gekennzeichnet, dass** er 50 bis 95 % (Gew/Gew) Hafniumborid und 5 bis 50 % (Gew/Gew) Siliciumcarbid enthält.

14. Verwendung eines Schutzüberzugs nach Anspruch 12 oder Anspruch 13 zum Schutz eines Teils auf der Basis von Kohlenstoff vor Korrosion bei sehr hohen Temperaturen.

15. Verwendung nach Anspruch 14, **dadurch gekennzeichnet, dass** das Teil auf der Basis von Kohlenstoff aus Graphit oder einem Verbundmaterial, das eine Matrix und Carbonfasern und/oder Siliciumcarbidfasern umfasst, besteht.

FIG. 1

FIG. 2

FIG. 3

FIG. 4

FIG. 5

FIG. 6

FIG. 7

FIG. 8

**EP 1 391 444 B1**

**RÉFÉRENCES CITÉES DANS LA DESCRIPTION**

**Documents brevets cités dans la description**

- US 3775137 A
- US 5750450 A
- EP 0675863 A
- FR 2551433 A
- US 4385020 A
- US 6126749 A
- FR 2790470 A
- FR 2611198 A